(19) **Europäisches Patentamt**
**European Patent Office**
**Office européen des brevets**

(11) **EP 3 418 718 B1**

(12) **EUROPEAN PATENT SPECIFICATION**

(45) Date of publication and mention
of the grant of the patent:
**13.01.2021 Bulletin 2021/02**

(51) Int Cl.:
***G01N 15/10*** *(2006.01)*

(21) Application number: **17177631.3**

(22) Date of filing: **23.06.2017**

(54) **SYSTEM FOR IMPROVED IDENTIFICATION OF PARTICLES AND CELLS**

SYSTEM ZUR VERBESSERTEN IDENTIFIKATION VON PARTIKELN UND ZELLEN

SYSTÈME POUR L' IDENTIFICATION AMÉLIORÉE DE PARTICULES ET DE CELLULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.12.2018 Bulletin 2018/52**

(73) Proprietor: **Cellix Limited**
**12 Dublin (IE)**

(72) Inventors:
• **KASHANIN, Dmitry**
  **12 Dublin (IE)**

• **SHVETS, Igor**
  **12 Dublin (IE)**

(74) Representative: **Purdylucey Intellectual Property**
**6-7 Harcourt Terrace**
**D02 FH73 Dublin 2 (IE)**

(56) References cited:
**US-A1- 2008 221 805    US-A1- 2011 279 130**
**US-A1- 2012 084 022**

## Description

### Field

This disclosure deals with improvements to systems for counting and identification of particles in particulate-containing fluids such as e.g. flow cytometry or particle flow analyser.

### Background

Note, for the purpose of this invention the term "particles" will be used to describe solid particles, e.g. particles of metals, oxides, nitrides, sulphides, polymer particles and particles of numerous other inorganic and organic materials, also mixed particles containing blends and composites of materials within individual particles and various nano- and micro-particles and clusters. The term will also be used to describe soft particles e.g. protein or fatty particles or indeed blends of soft particles and their compositions, blends and compositions involving soft matter materials and solid matter materials in each particle. The term will also be used to describe cells, e.g. mammalian cells, sperm cells, blood cells and any other cells.

The term "anisotropic" refers to being not spherical in overall symmetry of particle's shape or its response to the stimulus used in the apparatus. In the simplest case, this refers to overall shape of the particle (cell). For example, if the particle is elongated, ellipsoidal, bar-shaped or disk-shaped, discoid, this is then described as anisotropic in contrast to a spherical shape particle that is being described as isotropic. However, the overall shape in its own right is insufficient to distinguish between anisotropic and isotropic particles (cells). For example, if a conducting rod (a segment of wire) is embedded into an insulating sphere, this forms an anisotropic particle even if the overall shape of the particle is spherical, i.e. isotropic. The reason is that such a particle has different response to the alternating (AC) electromagnetic field depending on whether it is directed with the length of the rod along the field or perpendicular to the field. As the main response to the AC field will be in this case from the metallic rod, this response will be highly anisotropic, the insulating spherical envelope will have little effect on the situation. The same applies to optical response: it will be different depending on the direction of the light incidence and the polarization with respect to the long axis of the rod, again the effect of the isotropic dielectric envelope on the optical response will not alter anisotropic response from the conducting rod significantly. The same applies to the cells. The main contribution to AC signal response from a cell may not come from the exterior periphery of the cell but from its interior features or its membrane. This depends on the structure of the cell and the AC frequency.

When referring to laminar flow regime, we shall imply the flow conditions that fall under the Stokes regime ($\sim$1 <Re<$\sim$1 000). Re is the Reynolds number defined as $Re=\rho UH/\mu$, where $p$, $U$ and $\mu$, are the fluid density, the average velocity and dynamic viscosity respectively and $H$ is the characteristic channel dimension. In some cases the effect of particle focusing may still be achieved when Reynolds number is below 1 and therefore the invention is not restricted to the situation of $\sim$1<Re<$\sim$1000. Generally the range of Re values at which the focusing is achieved, also depends of the difference between the densities of the liquid and the density of the particles.

In recent years, microfluidic impedance cytometry has been further developed to count and discriminate between different kinds of cells. Multi-frequency impedance measurements can be used to determine the electrical properties of single cells in a microchip [S. Gawad, L. Schild, P.H. Renaud, Micromachined impedance spectroscopy flow cytometer for cell analysis and particle sizing, Lab. Chip. 2001 1 76-82].

Typical impedance measurement scheme described in the state-of-the-art utilize detection of particles (cells) based on a lock-in amplifier measurement and AC impedance spectroscopy measurements. A lock-in amplifier is a type of amplifier that can extract a minute signal due to particle (cell) passing through the detection area from a noisy environment. Depending on the dynamic reserve of the instrument, signals up to one million times smaller than noise components and relatively close in frequency, can still be reliably detected and segregated. Lock-in amplifier is generally used to detect and measure very small AC signals, in the range of a few nanoVolts. The measured value is complex AC impedance between two electrodes separated by the fluid in the microchannel. The most important part of this amplifier is a digital low-pass filter, the part that isolates the frequency of interest and eliminates the higher frequencies and noise. In order to achieve a real-time analysis of the cells with the rate of up to many thousands of cells per second, the detection system must be very fast.

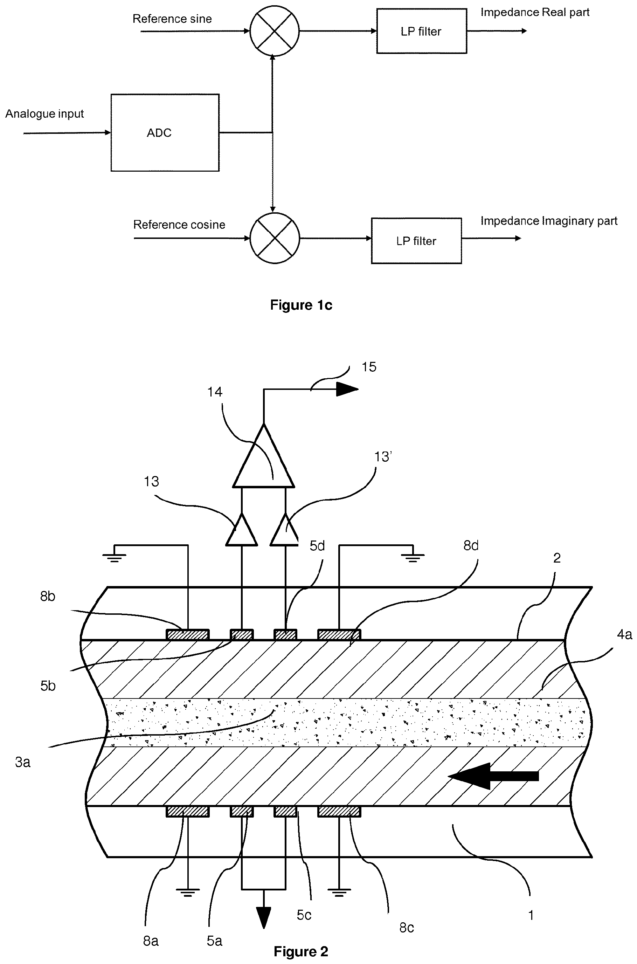

The amplifier is essentially a homodyne detector followed by low pass filter. Homodyne detector is a device that detects frequency-modulated signal by non-linear mixing it with a signal having the same frequency as the modulation signal. Whereas conventional lock-in amplifiers use analogue frequency mixers and R-C filters for the demodulation, state of art instruments have both steps implemented by fast digital signal processing for example using Field Programmable Gate Array (FPGA). FPGA is an integrated digital circuit whose logic behaviour and component mapping is programmable. Sine and cosine demodulation is performed simultaneously, which is sometimes also referred to as dual phase demodulation as displayed in Figure 1c.

Operation of a lock-in amplifier relies on the orthogonality of sinusoidal functions. When a sinusoidal function of frequency $f_1$ is multiplied by another sinusoidal function of frequency $f_2$ not equal to $f_1$ and integrated over a time much longer than the period of the two functions, the result is zero. Instead, when $f_1$ is equal to $f_2$ and the two functions are in phase, the average value is equal to half of the product of the amplitudes.

A lock-in amplifier takes the input signal, multiplies it by the reference signal (either provided from the internal oscillator or an external source), and integrates it over a specified time, usually on the order of milliseconds to a few seconds. The resulting signal is a DC signal, where the contribution from any signal that is not at the same frequency as the reference signal, is attenuated close to zero. The out-of-phase component of the signal that has the same frequency as the reference signal is also attenuated (because sine functions are orthogonal to the cosine functions of the same frequency), making a lock-in a *phase-sensitive detector* (PSD).

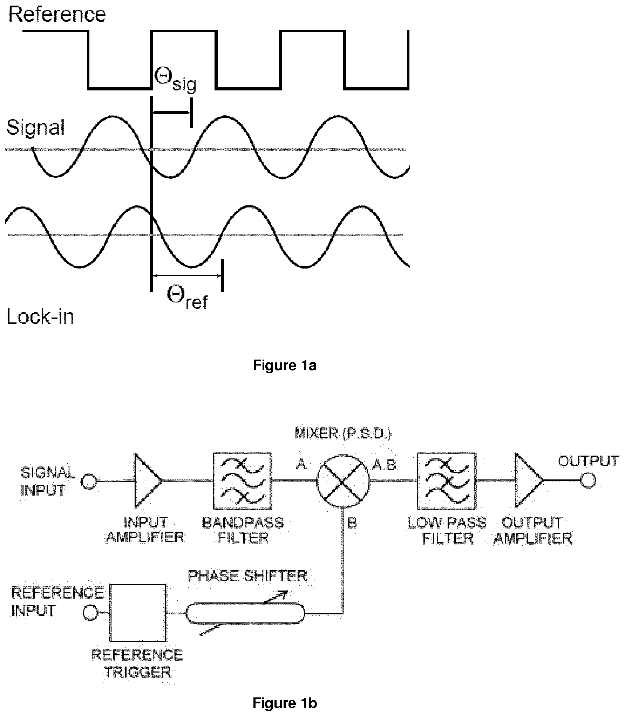

Usually, lock-in amplifiers generate their own internal reference signal by a phase-locked-loop (PLL) locked to the external reference. The external reference, the lock-in's reference, and the signal are shown in the Figure 1a. The internal reference is $V_L \sin(\omega_L t + \theta_{ref})$, where $\omega_L$ is the angular frequency of the signal and $\theta_{ref}$ is the phase of the reference signal.

The lock-in amplifies the signal and then multiplies it by the lock-in reference using a phase-sensitive detector or multiplier. The output of the PSD is simply the product of two sine waves.

$$V_{psd} = V_{sig}V_L \sin(\omega_r t + \theta_{sig}) \sin(\omega_L t + \theta_{ref}) =$$

$$= \frac{1}{2}V_{sig}V_L \cos([\omega_r - \omega_L]t + \theta_{sig} - \theta_{ref}) -$$

$$\frac{1}{2}V_{sig}V_L \cos([\omega_r + \omega_L]t + \theta_{sig} + \theta_{ref})\ (\ 1.1\ )$$

The PSD output is two AC signals, one at the difference frequency $[\omega_r - \omega_L]$ and the other one at sum frequency $[\omega_r + \omega_L]$. Then the PSD output passes through a low pass filter and the AC signals are removed.

If $\omega_r$ equals $\omega_L$, the difference frequency component in eq. (1.1) will be a DC signal. So, the filtered PSD output will be:

$$V_{psd} = \frac{1}{2}V_{sig}V_L \cos(\theta_{sig} - \theta_{ref}) \qquad\qquad (\ 1.2\ )$$

which is a DC signal proportional to the signal amplitude.

The general structure of a lock-in amplifier is shown in Figure 1b. Unlike in analogue amplifiers, in a digital lock-in the signal and reference are converted into a digital form by Analogue-to-Digital Converters (ADC) and are represented by sequences of numbers. Multiplication and filtering are performed mathematically by a digital signal processing (DSP). The phase sensitive detectors (PSDs) in the digital lock-in act as linear multipliers; that is, they multiply the signal by a reference sine wave. Analogue PSDs (both square wave and linear) have many problems associated with them such as output offsets and gain error. Output offset is a problem of analogue lock-ins because the signal of interest is a DC output from the PSD, and an output offset contributes to error and zero drift. The offset problems of analogue PSDs are eliminated using the digital multiplication of the signal and the reference. Analogue sine-wave generators are susceptible to amplitude drift: especially as a function of temperature. In contrast, the digital reference sine wave has a precise fixed amplitude. This avoids a major source of gain error common to analogue lock-ins. For applications that require high precision, short detection time, digital lock-in amplifiers are preferred to the analogue ones. Flow-cytometry is one such application.

Figure 2 describes how the digital lock-in can be used to detect and identify particles in a microfluidic channel 2 using the approach of AC impedance spectroscopy. The analogue input is a modulated signal that passes through a particle-containing fluid. It is applied as AC voltage at excitation frequency $f_0$ between detection electrodes 5a, 5b, 5c and 5d normally positioned on both sides of a common microfluidic channel 2 in the detection area 5. The voltage is applied to the two detection electrodes 5a and 5 c and the signal is taken from the opposite detection electrodes 5b and 5d and sent to the lock in amplifier 15. The detection electrodes 5a and 5c will be called here the excitation electrodes and the detection electrodes 5b and 5d will be referred to as signal electrodes. The signal is a complex function of the impedance of the cell, impedance of the elements of the cell, impedance of the fluid surrounding the cell, dielectric properties of the cell and its elements, dielectric properties of the fluid carrying the cell 3a, the shape of the electrodes, size of the cell compared to the size of the electrodes, position of the sell with respect to the electrodes and orientation of the cell with respect to the electrodes. Dielectric properties of the cell and the fluid as well as impedance of the cell and the fluid are complex functions with real and imaginary components. All these also depend of the excitation frequency

$f_0$.

Complete analytical description of the system in terms of the first principles is too complex and is far beyond the scope of this document. However, the complete analytical description is also unnecessary for the detection and identification of cells. The detection of cells is based on changes in the signal send to the lock-in amplifier resulting from the individual passing cells. The identification of the single particles (cells) is based on a principle: identical particles (cells) positioned in the same way with respect to the electrodes, will produce identical signals.

The signal induced is normally very small and it comes against significant noise background and therefore lock-in detection is used to demodulate the signal, extract it from the noise and measure it. What is crucial to our analysis is that the signal from the particles (cells) comes at frequency $f_0$, the same as the excitation frequency. After multiplying the modulated signal by a sinusoid with frequency $f_1$, we obtain a sum of sinusoids with different frequencies, i.e. a combination of modulation frequency and reference frequency, as described above. By applying the correct type of filter is possible to isolate the sinusoid with the frequency $f_0$ we are interested in. After the demodulation, the signal must be sent via low-pass filter. There are number of options for the low-pass filter such as: FIR (Finite length Impulse Response) filters and IIR (Infinite length Impulse Response) filters. IIR filters contain feedback, whereas FIR filters do not. As a result the nth output sample, $y[n]$, of an FIR filter is a function of only a finite number of samples of input sequence, whereas the *n*th sample of an IIR filter may depend upon an infinite number of samples. FIR filters are mostly implemented directly using a relation similar to the convolution sum, although they can also be implemented using discrete Fourier transforms (DFTs). The implementation of the measurement scheme is displayed in Figure 1c.

Paper [T.Sun and H. Morgan, Single-cell microfluidic impedance cytometry: a review, Microfluid. Nanofluid, 2010, 8, 423-443] describes several methods where cells flow between miniature electrodes which have an AC field applied across them. As the cell passes between the electrodes, the current path is disturbed and the change in current gives a change in the impedance signal associated with a single cell. Usually, impedance measurements at the frequency of (1-5 MHz) give information on the cell membrane capacitance whilst much higher frequencies (>10 MHz) probe the internal properties of the cell. Two or more frequencies can be applied simultaneously to differentiate different types of cells.

US2008/221805 discloses a microfluidic cell impedance analyser that detects high harmonics of the excitation voltage/current frequency.

The inventors have also investigated impedance flow spectroscopy method of cell detection where two pairs of electrodes are used similar to configuration described in ["Microfluidic impedance cytometer for platelet analysis", Mikael Evander et.al, Lab on a chip, volume 13, 2013], each pair having an excitation and measurement electrodes. An AC voltage at radio frequency from 100 KHz - 100 MHz is applied to an excitation electrodes and an electrical current is measured by the measurement electrodes. The electrical current being measured is then amplified and converted into an output voltage. The output signal is then demodulated to remove excitation frequency and to recover impedance magnitude and phase. As a cell passes through the pair of excitation and measurement electrodes, impedance magnitude and phase change, thus revealing the information about the cell properties. Additional pair of electrodes ensures measurement is differential thus eliminating parasitic electromagnetic noise. Typically, the impedance measurements are taken at low frequency: 100KHZ-2MHz to acquire information about the cell size and at high frequency 2-100MHz to acquire information about the cytoplasm and internal properties of the cell.

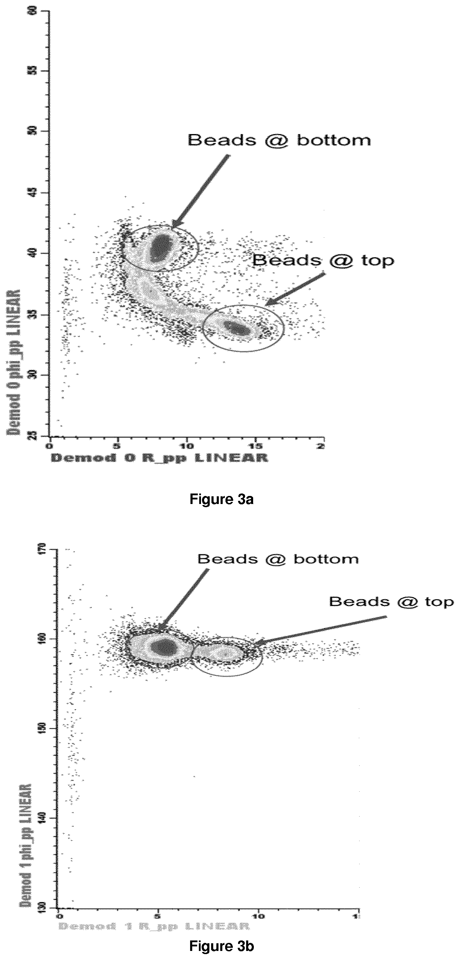

Figures 3a and 3b display density plot of impedance magnitude versus phase for a population of identical polystyrene beads. The beads are polystyrene beads of 6 micrometer in diameter. In that experiment the channel is of a square cross-section (30 micrometers x 30 micrometers) and there are two electrodes deposited on the channel with the size of 20 micrometers x 0.2 micrometers: the top electrode deposited on the upper wall of the channel (ceiling of the channel) is the excitation electrode and the electrode at the lower wall of the channel (floor of the channel) is the detection electrode. When particles pass in between the excitation and the detection electrode, they induce a significant variation in complex value of impedance comprised of variations in the magnitude of the impedance and also the variation in the phase of the impedance, equivalent to variation in real and imaginary parts of impedance. Figure 3a demonstrates that at low frequency (0.5MHz), the impedance signal depends on the cell size and also on the cell position within the microfluidic channel. Moreover, it demonstrates that signal is different for the cells flowing at the top of the channel and close to excitation electrode versus those flowing at the bottom of the channel and close to measurement electrode. The difference is partly due to non-uniformity of the electric field between two electrodes of a finite width. Additionally, there are differences of electric field gradient at the top and at the bottom of the channel; especially, the electric field gradient is greater at the excitation electrode compared to the one at the measurement electrode. This also contributes to the sensitivity of impedance signal to the cell position at high frequencies in Figure 3b. It is important to note that in measurements of polystyrene beads, we have not employed any hydrodynamic focusing or positioning of the sample, and yet achieved separation of homogeneous population into several distinct subpopulations.

Impedance flow cytometry can readily detect a cell, and the original technique was developed by Coulter for this. When it comes to more challenging task of separating the sub-populations of cells within the sample fluid, the performance of the impedance cytometry is much less convincing due to large spread in the data points corresponding to each cell. Hydrodynamic focusing is particularly important for the detection of cells and particles on a chip utilizing impedance measurements. Indeed, for identification of cells (or particles) it is necessary to arrange these in such a flow that they pass in front of the detection system one by one. This "one cell-by-one cell" principle is fundamental for the successful cell identification: one needs to avoid the situation of multiple cells passing through the detection system at once as it could prevent the identification. It is common to use hydrodynamic focusing to achieve this. Hydrodynamic focusing is based on injection of the sample fluid into the laminar flow of sheath fluid. The two flows then merge into to a single channel, usually of a reduced cross-section. This reduces the cross-sections of both, the sheath fluid part of the flow and also the sample liquid flow, and thus achieves the desired reduction in the cross-section of the sample fluid flow. To control the cross-section of the sample fluid, one could change the flow rates of the sample fluid and sheath fluid. In relation to the electrical impedance based cytometry, hydrodynamic focussing reduces the width of the conductive sample stream to the appropriate size of the cells, increasing the percentage resistance change in the conductive path when a cell passes by.

In recent years there is increasing body of work on the use of hydrodynamic focusing in microfluidic chips and microchannels. For example, the Japanese patent laid-open No 2003-107099 discloses a "fractionation microchip having a channel for introducing a particulate-containing solution, and a sheath flow forming channel arranged on at least one lateral side of the of the introducing channel. The particulate fractionation microchip disclosed in Patent 2003-107099, is so designed that fluid laminar flows are formed by a "trifurcated channel" having a channel for introducing a particulate-containing solution and two sheath flow-forming channels. In essence this is a 2D hydrodynamic focussing on a chip. Similar approach is described in [R. Rodriguez-Trujillo, C. Mills, J. Samitier, G. Gomila, Microfluid. Nanofluid, 3 171 (2007)] and [P.Walsh, E. Walsh, M. Davies, Int. J. Heat Fluid Flow 28 44 (2007)].

There are also solutions for integration of 3-D hydrodynamic focussing with a conventional type microfluidic chip described in ["Three-dimensional hydrodynamic focussing in a microfluidic Coulter counter", R. Scott, P. Sethu, C.K. Harnett, Rev. Sci. Instruments 79 046104 (2008)]. A similar approach is described in ["Universally applicable three-dimensional hydrodynamic microfluidic flow focussing" Yu-Jui Chiu, S.H. Cho, Z. Mei, V. Lien, T.F. Wu, Y.H. Lo, Lab Chip 2013 13 1803]. That study deals with three-dimensional hydrodynamic focusing where the sample channel and the two sheath channels having a greater height than the sample channel, join at the junction before the main channel which has the same height as the sheath channel. The merging of channels of different heights produces flow confinement both in the lateral and transverse directions, resulting in 3D focused flow. The patent publication WO 2008/125081 A1 Theisen Janko et al provides the method for focusing fluid in microfluidic channel structure and the implementation of such a microfluidic structure to achieve hydrodynamic focusing of fluid. The patent publication US 2009/0283148 A1, Shinoda et. al. [US 2009/0283148 A1, "Microchip and channel structure for the same", Masataka Shinoda, May 4 2009] teaches the method of three dimensional hydrodynamic focusing where the microtube is inserted into the microchip to provide the sample flow.

Despite these efforts, integration of 3D hydrodynamic focusing with microfluidic chip is not simple and the performance of such on-chip 3D focusing has limited capability. To reduce the variation of the impedance flow cytometry measurements, it is desirable to be able to direct the sample flow through a well-defined point in between the electrodes, e.g. the centre of the channel. This reduces the spread in the data points from a single population of cells of type of particles in the flow. It may also be desirable to align all the cells (particles) in the same way with respect to the direction of the electric field created by the electrodes. Cells often do not have an overall spherical shape but are rather elongated, ellipsoidal or discoid in shape. The signal from the cell in electrical impedance cytometry device depends on the orientation of the elongated axis of the cell with respect to the electrodes. The key conclusion for the review of the state-of-art is the following: it would be highly desirable to have means of extracting information on inaccuracies of particles position and alignment without or in combination with positioning or aligning particles (cells) and use it to reduce the spread of data points from individual particles (cells) in order to improve their identification and separation into subsets.

It is an object therefore to provide an improved system for counting and identification of particles in a particulate-containing fluid.

## Summary

According to the invention there is provided a system for identification of particles/cell according to claim 1.

The invention provides a system for detection of cells or particles based on measurements of complex AC impedance between electrodes across the flow of fluid containing such cells or particles. The electrodes are positioned directly on the walls of the common microfluidic channel, typically along two opposite sides of the channel and usually in direct electric contact with the fluid inside the channel. The detection is done by energising one or more detection electrodes and detecting AC complex signal comprising the amplitude and the phase of the information from other detection electrodes using phase-sensitive detector that is also sometimes referred to as lock-in amplifier. The cells are arranged to pass in between the electrodes of the detection area in a one-by-one file. The signal is altered by each passing cell or particle, and the identification of the cells or particles is done by analysing amplitude and phase characteristics of the signal measured by the lock-in amplifier and their dependencies on the frequency of the AC signal energising the detection electrodes. This method is called AC impedance spectroscopy. In order to reduce the statistical spread of data measured from a set of cells or particles by impedance spectroscopy, they need to be consistently and reproducibly positioned in the common microfluidic channel with respect to the detection electrodes as the signal detected depends on the position of the particles (cells). Such consistent and controlled positioning of the particles (cells) within the common microfluidic channel can be achieved by means of hydrodynamic focussing.

The orientation of a cell or particle with respect to the detection electrodes is important in the case of particles (cells) that are not circular in shape, e.g. elongated, elliptical or discoid. We shall call such particles anisotropic in contrast to sphere-like cells or particles. We also explain that even a particle (cell) of a sphere-like overall shape can still be anisotropic if its interior AC electric characteristics are orientation-dependant. The orientation of the particle (cell) defines the change in AC impedance induced between the electrodes from such single passing anisotropic particles (cells).

The measured signals at integer multiple frequencies determine orientation and position of the cell or particle with respect to the electrodes and used to identify characteristics of said cell or particle.

In one embodiment the detector is a narrow band-pass amplifier with at least one centre of the pass band tuned to the value $N\omega$.

In one embodiment the detector is a lock in amplifier set to the frequency $N\omega$.

In one embodiment the particles/cells are mammalian cells and/or X- and Y-chromosome bearing semen cells.

In one embodiment there are at least two signal electrodes, and the signal at the integer multiple N of frequency w is measured by taking the signals from said two signal electrodes and a module configured for a comparative analysis of the two signal electrodes using a differential amplifier or a comparator or a subtractor device.

In one embodiment the detection of cells comprises a module for measuring/detecting the signal from the said at least one signal electrode at the excitation frequency $\omega$ and measuring/detecting the signal at the frequency/frequencies of integer multiple of frequency $\omega$.

In one embodiment there is provided a module for detecting generation of higher frequency signal at integer multiple harmonics such that the amplitude of the multiple harmonics signal is particle/cell-specific to identify said particle/cell.

For a given kind of particles/cells, the multiple harmonics depend on the alignment of the cell with respect to the field.

In one embodiment the signal measuring/detection at the frequency $\omega$ is performed by using a lock-in amplifier or phase sensitive detector or demodulator. In one embodiment the detection/identification of particles/cells is done by optical means in addition to the measuring/detecting the signal at the frequency/frequencies of integer multiple of frequency $\omega$.

In one embodiment there is provided a module for positioning of particles/cells within the cross-section of the microfluidic channel.

In one embodiment the system is further equipped with means for aligning anisotropic particles/cells with respect to the signal and excitation electrodes.

In one embodiment the excitation electrode and the signal electrode comprise different surface areas of electric coupling to an interior of the microfluidic channel which defines position dependent current density across the cross-section of the microfluidic channel and enables generation of the signal at the frequency $N\omega$ dependent on the position of the particles/cells with respect to the sensing electrodes.

In one embodiment the signal obtained at the frequency $N\omega$ is correlated with a signal obtained at the excitation frequency $\omega$ to offset inaccuracy induced by inconsistency in the positon and alignment of the particle/cell to identify the particle/cell.

In one embodiment the signal obtained at the frequency $N\omega$ is correlated with the signal obtained using optical means to offset inaccuracy induced by inconsistency in the positon and alignment of the particle/cell and thus improve identification/detection of the particle/cell.

In one embodiment the frequency/frequencies $\omega$ is empirically chosen to maximise the multiple integer harmonics $N\omega$ signals that are specific to particles/cells and the sample fluid.

In one embodiment the integer number is empirically chosen to maximise the multiple integer harmonics $N\omega$ signals that are specific to particles/cells and the sample fluid and the frequency $\omega$.

In one embodiment there are multiple signal electrodes tuned to different frequencies $\omega_i$ or tuned to different integer multiples of these frequencies.

In one embodiment the direction/alignment of the AC electric field between at least some of the excitation electrodes and respective signal electrodes are different to those for the other excitation electrodes and their respective signal electrodes.

In an example not part of the present invention there is provided a method for identification of particles/cells comprising the steps of:

configuring at least one microfluidic channel to sustain a flow of a sample fluid through said microfluidic channel and carrying the particles/cells along the channel;

positioning at least one excitation electrode and at least one signal electrode, the excitation and signal electrodes being electrically coupled with each other via the flow of sample fluid in the microchannel; and

connecting the at least one excitation electrode to an AC voltage/current source operating at a frequency, $\omega$, and connecting the at least one signal electrode is connected to a detector measuring the signal at one or more frequencies set to an integer multiple, $N\omega$, of the frequency $\omega$.

In one example there is provided a method of measuring signals at integer multiple frequencies and determining orientation and position of the cell or particle with respect to the electrodes and used to identify characteristics of said cell or particle.

An example not part of the present invention provides a microfluidic device capable of robust discrimination between subsets of particles or subsets (subpopulations) of cells in a microfluidic flow format and method for using the same.

An example not part of the present invention provides a device and microfluidic chip suitable for separation between X- and Y-chromosome bearing sperm cells, in particular for the bovine and/or equestrian sperm cells and method for using the same.

The invention extracts information on the orientation alignment and/or position of anisotropic particles, cells, and mammalian cells, sperm cells in order to be able to use this information for more accurate identification of cells and particles and more robust separation between subsets of these.

The invention extracts information on the orientation alignment and/or position of anisotropic particles, cells, mammalian cells, sperm cells under conditions of flow in a microfluidic channel.

The invention provides means for identifying anisotropic particles (cells) having the desired direction of the alignment of the particles (cells) with respect to the detection electrodes, where such electrodes are positioned along the microfluidic channel and such electrodes are used for detecting the particles (cells) by the method of AC impedance.

The invention provides a system that can measure the position of the particles (cells) flowing through a microfluidic channel with respect to the walls of the said channel.

The invention reduces the spread of the data points from a population of anisotropic particles (cells) resulting from their inconsistent alignment and/or inconsistent positioning in a microfluidic channel and as a result make the identification of the particles, cells, sperm cells, bacteria more robust.

The invention stresses that there are known devices and methods enabling uniform positioning of particles (cells) within a channel of microfluidic chip, as well as methods for alignment of anisotropic cells in microfluidic chips. All these help to reduce the spread of data points produced by a population of particles (cells). However, any further reduction in the spread of the data points or any further means for identifying particles (cells) from a given spread of data point is highly desirable as it makes identification of particles (cells) more robust.

A system is described for more accurate identification of cells in microfluidic channel. The invention allows extracting further information from a set of data points obtained using AC impedance spectrometer to take into account error in the signal resulting from variation in the cell position and alignment. Most of the embodiments presented in the document work in conjunction with the identification of cells (particles) using AC impedance spectroscopy.

In this description the term "particle" or "cell" is used to cover any and all of these. One can call the liquid/fluid carrying such particles in microfluidic channel as sample fluid, or particle containing fluid. In the recent patent application by the same inventors that is incorporated in the state of the art and referred extensively, this is also referred to as particulate containing fluid. The emphasis is on technologies that can perform such counting and identification of particles and/or cells in a microfluidic chip format as opposed to analysis using large scale cytometers. The said microfluidic chip has at least one microfluidic channel where such counting and identification takes place in the detection area (zone) of the channel. The preferred embodiment deals with the method of counting and identification based on AC electrical impedance spectroscopy. The invention deals with the cells that are anisotropic in their characteristics that is measured in the detection area. For example, if the detection is based on AC electrical impedance spectroscopy, one can refer to particles (cells) that have their complex AC electrical impedance characteristics dependent on the direction of the electric field and/or current. This anisotropy of the particle (cell) can come from the anisotropy of the overall shape of the particle (cells) or anisotropy of the impedance characteristics of its structure and or texture. For example this could the anisotropy of electrical characteristics of the nucleus of the cells or its membrane. The invention describes an apparatus for more robust counting or identification of the cells and the related method.

The term particle or cell will include single particles or cells and also clusters of these, having e.g. 2-20 particles or cells bound together.

## Brief Description of the Drawings

The invention will be more clearly understood from the following description of an embodiment thereof, given by way of example only, with reference to the accompanying drawings, in which:

Figure 1a Operation of phase-locked loop (PLL) of lock-in amplifier with external reference signal.

Figure 1b General structure of lock-in amplifier.

Figure 1c General structure of digital lock-in amplifier using internal reference and demodulating real and imaginary parts of impedance.

Figure 2. A view of a section of microfluidic chip showing the detection area of the common microfluidic channel and measurement circuit.

Figure 3a Density plot of impedance magnitude versus impedance phase measured at excitation frequency 0.5MHz for a population of identical polystyrene beads suspended in phosphate saline buffer.

Figure 3b Density plot of impedance magnitude versus impedance phase measured at excitation frequency 10 MHz for a population of identical polystyrene beads suspended in phosphate saline buffer.

Figure 4a. Top view of microfluidic chip embodiment showing the detection area of the common microfluidic channel.

Figure 4b. Detailed top view of a section of microfluidic chip showing the detection area of the common microfluidic channel and measurement circuit.

Figure 4c Detailed view of a section A-A' of microfluidic chip showing the detection area of the common microfluidic channel.

Figure 5a. Cross-section through the line A-A' of the microfluidic chip shown in Figure 4b and the measurement circuit.

Figure 5b. Demodulated signal for cells aligned in vertical and horizontal direction measured at frequencies $\omega$ and $N\omega$

Figure 6. Cross-section through the line B-B' of the microfluidic chip shown in Figure 4b.

Figure 7 Measurement circuit for simultaneous detection at frequencies $\omega$ and $N\omega$.

Figure 8 Measurement circuit for sequential detection at frequencies $\omega$ and $N\omega$ with 2 sets of excitation and detection electrodes.

Figure 9 cross-section of the common channel with two alignment electrodes producing preferentially vertically alignment field and the sample fluid focused in the vicinity of the left wall of the channel.

Figure 10 Cross-section through the line B-B' of the microfluidic chip shown in Figure 4b and having electrodes of varying shapes and producing a field with varying direction along the common channel.

Figure 11 Cross-section through the line B-B' of the microfluidic chip shown in Figure 4b and having electrodes of varying shapes and producing a non-uniform electric field in Z direction.

Figure 12. Demodulated signal for cells located at points A and B in Figure 11 measured at frequencies $\omega$ and $N\omega$

Figure 13 Cross-section through the line B-B' of the microfluidic chip shown in Figure 4b and having electrodes of varying shapes and producing a field with varying direction along the common channel.

Figure 14 Cross-section through the line B-B' of the microfluidic chip shown in Figure 4b and having electrodes of varying shapes and producing a field with varying direction along the common channel.

## Detailed Description of the Drawings

As described above the importance of positioning of particles (cells) within the channel of a microfluidic impedance flow cytometer chip is well appreciated. The particles need to be positioned in a train so that they pass the detection area in a one particle (cell) at a time format. The particles (cells) need all to pass at the same distance away from the electrodes in order to increase the resolution capability of the spectrometer, i.e. its ability to distinguish between different particles (cells). At present the most common approach to achieving such a positioning is in using a focusing that aligns the particles (cells) along the centre of the microfluidic channel. This is done by means of the guidance (sheath) fluid that envelopes the sample fluid all around and guides the sample fluid through the centre of the microfluidic channel. From the review of current state of the art it is evident that prior art solutions teach extensively how to position the cells within a common microfluidic channel using hydrodynamic focussing and inertial focussing in the flow. Furthermore this allows aligning cells into a chain so that they pass the detection area in one-by-one file. This allows passing the particles (cells) along similar locations of the detection area, e.g. at similar distance from the detection electrodes and significantly reduces the spread of data points from a set of identical particles or a population of cells making their identification more feasible.

However, additional complexity and issue arise with anisotropic particles (cells). The prior art, does not completely solve the problem of variation of data points from individual particles (cells) due to the particles (cells) orientation within microfluidic channels. It is also clear, it would be advantageous to have means of measurement of the alignment direction with respect to the elements of the detection system. For example, it is important to know if short axis of discoid cell is aligned parallel or perpendicular to the detection electrodes. All this would allow increasing the signal arising from single particles (cells) thus making their identification and subsequent separation, more robust and detect subpopulations of particles with minute difference from each other. Alignment of anisotropic particles is a major issue for microfluidic flow cytometers or particle analysers that is not restricted to AC impedance detection and identification of the cells.

The invention can be best understood from the description of the following drawings showing a number of embodiments. The embodiments given do not form an exhaustive list but rather are examples.

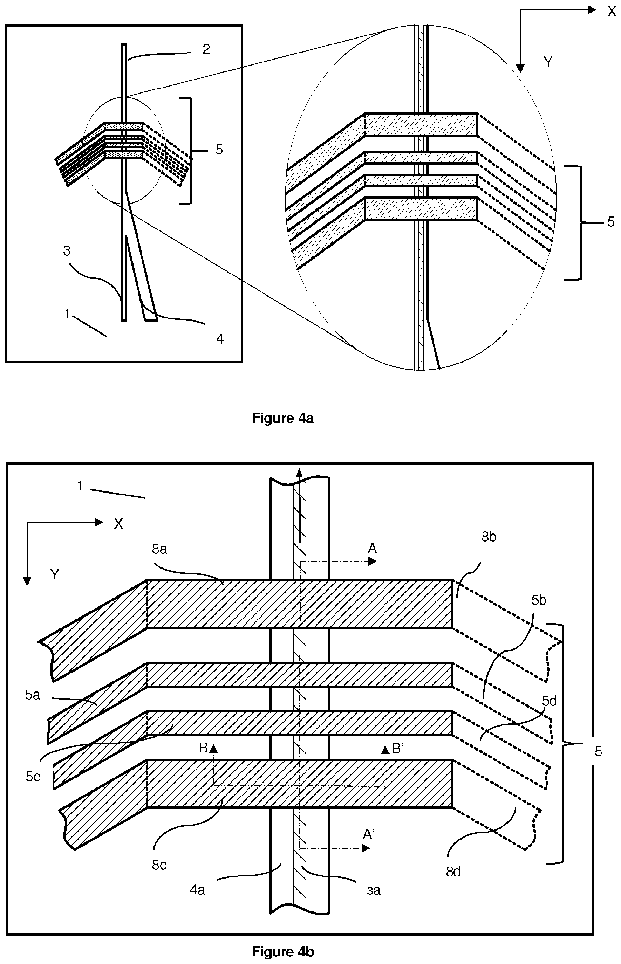

Figure 4a describes a microfluidic chip comprising the common microfluidic channel 2 and the detection area 5. There are other optional elements of the microfluidic chip such as area where a number of channels containing sample fluid 3a and the guidance (sheath) fluid 4a merge into the single common channel 2. Again, this arrangement is optional. One may operate microfluidic chip without any sheath fluid, for example by filling the entire cross-section of the microfluidic channel with sample fluid alone. The optional area where multiple channels, sample channel 3 and guidance microfluidic channel 4, merge into a common microfluidic channel, is also shown in Figure 4a. This area is located upstream from the detection area. In this device, the common microfluidic channel 2 has a rectangular cross-section with the dimensions in the following range: width w 20 to 3000 micrometres, more preferably 20 to 500 micrometres and the height h in the range of 10 to 3000 micrometres, more preferably 20 to 500 micrometres. The cross-section of the common microfluidic channel 2 does not need to be rectangular, and channels with other cross-sections can also be deployed.

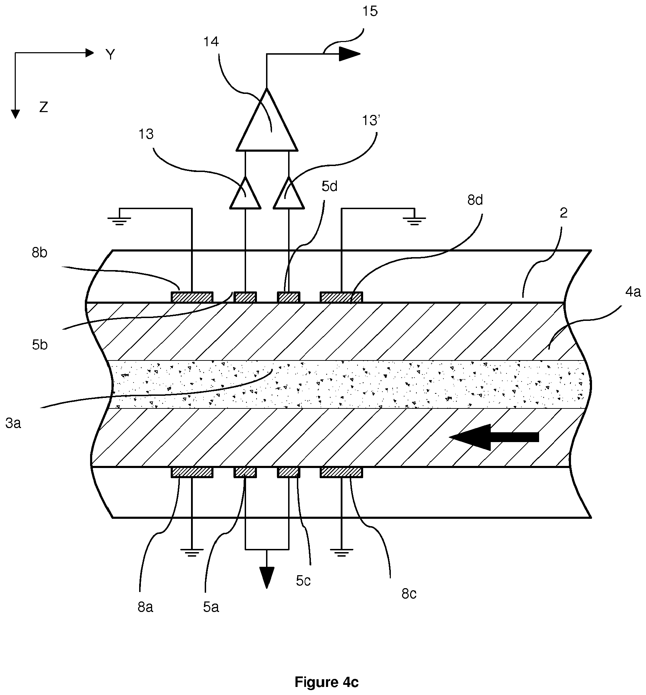

The microfluidic chip is only a part of the microfluidic device. The microfluidic device also includes measurement system for the detection of particles and means for sustaining and control of the fluid flow in the microfluidic channel, mixing the flows of the sample fluid and the sheath fluid, regulating the flows. The flow of fluids in the channels is sustained by a pump or multiple pumps or a pressure source/sources. There is a flow of the particles containing fluid 3a enveloped in the flow of the guidance fluid 4a. For shortness, we may call the particles-containing fluid also the sample fluid. These two terms may be used interchangeably. One can refer to it as the liquid carrying particles/cells. Therefore it is understood that the liquid carrying particles/cells and the particles/cells themselves form sample fluid. For example, this could be TRIS A buffer in case of sample fluid for carrying sperm cells. The particle containing fluid is the fluid that contains the particles of interest. These could be organic or inorganic particles. These could also be alive or dead cells including mammalian cells, sperm cells, yeast cells, particles of biological and non-biological origin etc. In this embodiment the particles-containing fluid stream (sample fluid) is located at the centre of the guidance fluid 4a flow, i.e. at the centre of the cross-section of the common microfluidic channel 2. Therefore, the guidance fluid 4a performs the function of the sheath fluid focussing the flow of the particle containing fluid into a tighter flow of reduced cross-section. One could construct other embodiments where the sample fluid is guided by the guidance fluid to be positioned not at the centre of the common microfluidic channel but e.g. at a corner of rectangular cross-section of the common microfluidic channel or along its wall. The guidance fluid also does not need to envelope the sample fluid all around but could be enveloped e.g. on two or three sides. To obtain the focussing of the particles-containing fluid 3a by means of the guidance fluid, the microfluidic chip 1 comprises sample microfluidic channel 3 sustaining a flow of particles containing fluid and a guidance microfluidic channel or channels 4 sustaining a flow of guidance (sheath) fluid. The two channels merge forming the common microfluidic channel 2) so that the sample microfluidic channel 3 is coupled to the centre of the guidance microfluidic channel 4 to obtain the position of the sample fluid as shown in Figures 4b and 4c. Typically the flow rate of the guidance fluid is substantially greater than the flow rate of the sample fluid, i.e. greater by a factor of 2 to 100.

The detection area 5 in Figure 4b and 4c is equipped with the excitation electrodes 5a and 5c the signal electrodes 5b and 5d. In this embodiment there are optional shielding electrodes 8a, 8b, 8c, and 8d to reduce the noise induced in the detection electrodes and improve signal detection. Such noise is manifested as voltage or current induced in the detection electrodes from various other electrodes of the microfluidic chip and various other sources of noise. The shielding electrodes 8a, 8b, 8c, and 8d are connected to a fixed potential, e.g. a ground potential. The shielding electrodes may be or may not be in electric contact with the interior of the common microfluidic channel 2. The detection electrodes 5a, 5b, 5c and 5d normally have electric contact with the interior of the common channel but for some embodiments, especially operating at higher end of frequency range, they may also be electrically insulated from the interior of the common microfluidic channel. The detection signal electrodes 5b and 5d are connected to the detection circuit. Detection excitation electrodes 5a and 5c are connected to AC voltage or current generators and the signal electrodes are connected to the AC voltage or current detectors. We shall stress that some of the detection electrodes are connected to excitation AC voltage or current sources even though we attribute them to the set of detection electrodes; and other detection electrodes are connected to AC voltage or current meters. To differentiate between the two subsets of the detection electrodes, we shall also call the detection electrodes connected to the AC voltage or current generator, the excitation electrodes and the detection electrodes connected to the AC voltage current detector/meter, the signal electrodes. In the device shown in Figure 4b, there are two excitation electrodes and two signal electrodes. The two excitation electrodes and the two signal electrodes are positioned on the opposite sides of the microfluidic channel and therefore are electrically coupled with each other via the fluid contained in the channel. This coupling can be of resistive- or capacitive nature but more generally at AC coupling it has a combined resistive-capacitive character. In the device of Figure 4b, the excitation electrodes 5a and 5c are connected to the same AC potential, they are both connected to the same voltage source. The voltage source generates voltage in the range of 0.01-50 V and the frequency of 10 kHz- 200 MHz. This is more clearly shown in Figure 4c that is a cross-section of Figure 4b through the line A-A' along a vertical plane perpendicular to the detection electrodes, i.e. is the ZY plane of Figure 4b. The other two electrodes are signal/detection electrodes 5b and 5d, are electrically connected to two pre-amplifiers: pre-amplifiers 1 and preamplifier 2 marked with numerals 13 and 13' in Figure 4c. These two pre-amplifiers have adjustable gain values and generally these gain values do not have to be equal thus reflecting the differences in the geometry of the two signal electrodes, and their size.

According to the method of AC impedance detection, the electrodes detect the change in impedance between them (between the excitation electrode and detection electrode) resulting from the particles/cells passing through the detection area in between the excitation detection electrode/electrodes and the signal detection electrode/electrodes. We shall stress that the signal detected by the signal/detection electrodes depends on the properties of the cell/particle, position of the cells/particles with respect to the electrodes and also in the case of anisotropic cells, it depends on the cell orientation with respect to the electrodes. Generally, in the case of the discoid cells, the signal on the detection electrodes, i.e. the complex impedance change due to passing cell, is greater if the cell has the plane of the greater cross-section aligned along the detection electrodes. In the configuration of the Figure 4c, the signal on the detection electrodes is greater if the discoid cell has short axis aligned along the z-direction. As the value of the signal detected by the detection electrodes is not only dependent on the type of the cell but also on its position and the alignment, it is crucial to achieve as uniform as possible a positioning and alignment of the cells (particles) with respect to the detection electrodes. This is necessary for more reliable differentiation between different types of cells (particles) that is important for identification of different cell populations and also for the separation of different sub-populations of cells (particles). More homogeneous alignment of all the cells with respect to the detection electrodes reduces the spread of the values of the signals detected by the signal electrodes resulting from the single cells passing in between the detection electrodes. If such a uniform alignment of cells/particles is not possible or if the identical positioning of the cells/particles in front of the detection electrodes is not possible, one could benefit from additional information indicating cell positioning and alignment. This information could be then incorporated into the information obtained from the signal electrodes to offset inaccuracies in the cell/particles position, introduce correction to the signal if required and improve cell/particle identification.

At this point the frequency of the voltage source should be noted. The signal induced in the signal electrodes by cells/particles passing in front of the electrodes is due to conductance change in the space between the excitations and detection electrodes and also due to permittivity change in the same space. It should be appreciated that the dielectric permittivity $\varepsilon(f)$ of a typical cell is frequency f dependent, and its conductance properties are also frequency dependent. These properties may also depend on other external factors such as pH liquid or temperature as the internal properties of the cells are affected by the conditions outside the cell. The conductance of the liquid bi-layer along the cell surface also depend on the pH of the liquid carrying the cells and its internal structure. It is preferable to choose the AC frequency f of the voltage energising the excitation electrodes such that the dielectric permittivity $\varepsilon$ at this frequency is significantly different from that of the liquid where the cells are placed. The dielectric permittivity is a complex function that has two components: the real Re $\varepsilon(f)$ and imaginary Im $\varepsilon(f)$ ones, both of these being functions of frequency. The same applies to conductance. It is preferable to operate the excitation electrodes at the frequency where there is significant difference between the conductance of the particles/cells and that of the liquid carrying these. Such a difference is responsible for the magnitude of the signal induced in the signal electrodes. Since cells have internal fine structure with elements of the structure having their own different dependencies of permittivity, there is generally a rather broad window of frequencies where the signal from the cells/particles can be readily detected. The frequency $\omega$ is usually selected in such a window by tuning the frequency to optimise the value of the signal induced in the detection electrodes.

The outputs from the two pre-amplifiers shown in Figure 4c are connected to a comparator or a differential amplifier 14. The comparator 14 amplifies the difference between two inputs. The comparator is connected to a lock-in amplifier or demodulator (phase sensitive detector) capable of measuring the signal at the frequency $\omega$ of the AC voltage source connected to the excitation electrodes. In the absence of any particles/cells in the microfluidic channel, the output from the comparator is set to zero if the outputs of the pre-amplifiers 13 and 13' set accurately to compensate each other.

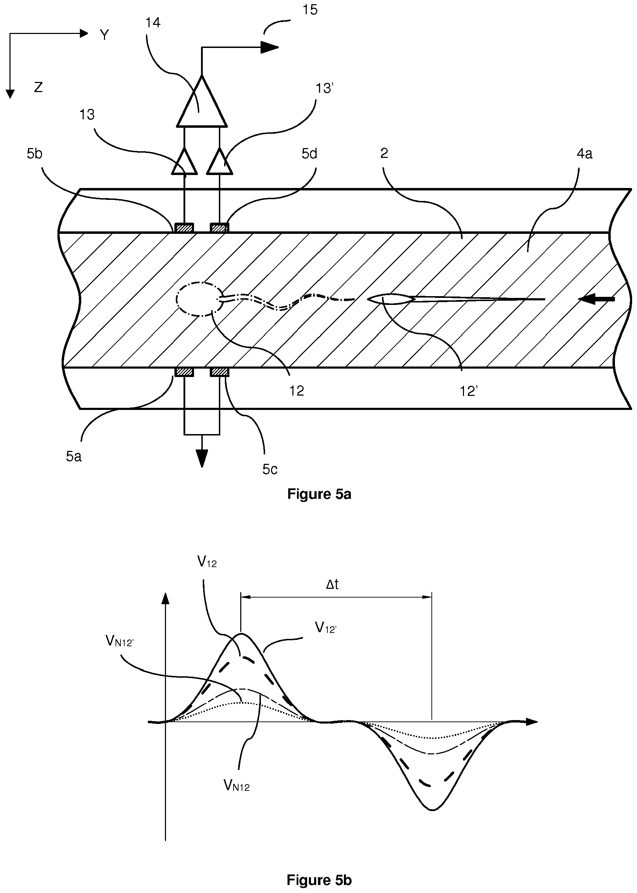

Once the particle, cell passes in between the excitation electrode and the signal electrode, it will induce signal in the comparator at the frequency $\omega$ of the generator connected to the excitation electrodes. The typical amplitude of the demodulated output signal from the comparator is shown in Figure 5a. The signal will appear as a wave of one polarity followed by the wave of the opposite polarity and the same magnitude. This shape of the signal is due to the cell/particle passing first in front of the signal electrode 5b connected to the pre-amplifier 13 and inducing signal of amplitude e.g. $V_{12}$ that is introduced into the comparator 4 with the positive polarity and then passing in front of the second signal electrode 5d connected to the pre-amplifier 13' inducing rather the same signal $V_{12}$ that is introduced into the comparator with a negative polarity. The time delay $\Delta t$ between the first hump (peak) and the second one is indicative of the flow velocity in the channel 2 as it is equal to the time required for the same cell/particle to travel from the position in front of the first signal electrode 5b to the same position in front of the second one 5d. The detection of this signal is done using the method of demodulation with the help of the lock-in or phase sensitive detection 15 as described in the state of the art section of this document. The amplitude and the phase of the signal are indicative of the characteristics of the particle (cell) and therefore can be used as a key indicator in identifying the particle (cell) or the subset to which the particle (cell) belongs. The difficulty arises in the case of anisotropic particles as their orientation with respect to the excitation and the signal electrodes will alter the value of the signal induced. For example the same particle of an anisotropic discoid shape positioned at the same position but with two different orientations as shown in Figure 5b, it will induce two different values of the signal. Figure 5a shows schematically two discoid shape cells, labelled as passing cell 1 indicated by numeral 12 and passing cell 2 indicated by numeral 12' both positioned in the middle of the channel. The signals from these two induced in the signal electrodes, may be substantially different. From our extensive experimental observations, we find that the signal from the cell positioned with the short axis of the discoid aligned along the z-axis, the signal will be greater, i.e. it will be greater $V_{12}$ for the passing cell 12 than for the passing cell 12' alignment correspondingly $V_{12}$'. Therefore the ability for identifying the particle/cells is compromised by the uncertainty of its orientation. It should be stressed that the size of the cell is disproportionately increased in Figure 5a and 5b for clarity of the diagram.

In the same way the position of the particle will also alter the value of the signal induced as the AC field is not entirely homogeneous in between the excitation and the sensing electrodes. For example if the passing cell 12 is displaced along the Z-axis in Figure 5a, the amplitude of the signal induced in the signal electrodes, may change.

There are ways of improving the alignment of the anisotropic cells/particles and also improving their position within the cross-section of the channel as explained in the description of the state of the art in this document. Clearly, these make positive contribution to the accuracy of the particle/cell measurements but they do not bring complete certainty, especially to the particle/cell alignment. It is clear that any further means of improving information on the position and orientation/alignment of each passing cell/particle could be highly desirable as it would improve the reliability of the identifying the position and orientation/alignment of the cells/particles. The identification of the particle/cell position and alignment should be done in real time within the same time interval as the measurements using the demodulation of the AC impedance change as described above.

To achieve this, this invention offers the solution as follows. It can be established that in addition to the AC signal at the frequency ω, the inventors have detected generation of higher frequency signal at integer multiple harmonics: 2ω, 3ω, 4ω 5w, and other higher integer harmonics. These frequencies can be expressed in general as Nw where N is an integer number, which can be described as signal multiple harmonics of the main signal. The amplitude of this multiple harmonics signal is particle/cell-specific in the same way as the amplitude of the main harmonic at the frequency ω. The likely nature of this signal can be determined. The multiple harmonics response can result from non-linearity in the AC current-voltage characteristics of the cell/particle and non-linearity in the AC electric field response characteristics of the cell/particle. In other words, the first group of contributions could be described as non-linearity in real and imaginary components of the AC impedance and the second group of contributions could be described as non-linearity in the dielectric permittivity, again having its real and imaginary components. As the cell/particle is not uniform but may have fine structure (DNA, membrane, other elements of the fine structure) with its own AC impedance and AC permittivity characteristics, these non-linearities can result predominantly from certain elements of the cell/particle or they can also result from the body of the cell overall.

As the cell/particle is placed in liquid in the common microfluidic channel, the interface between the cell/particle, could also make contribution to the non-linearity, this could be e.g. non-linear I-V characteristic of the liquid adjacent bi-layer that forms along the surface of the cell/particle immersed in the liquid.

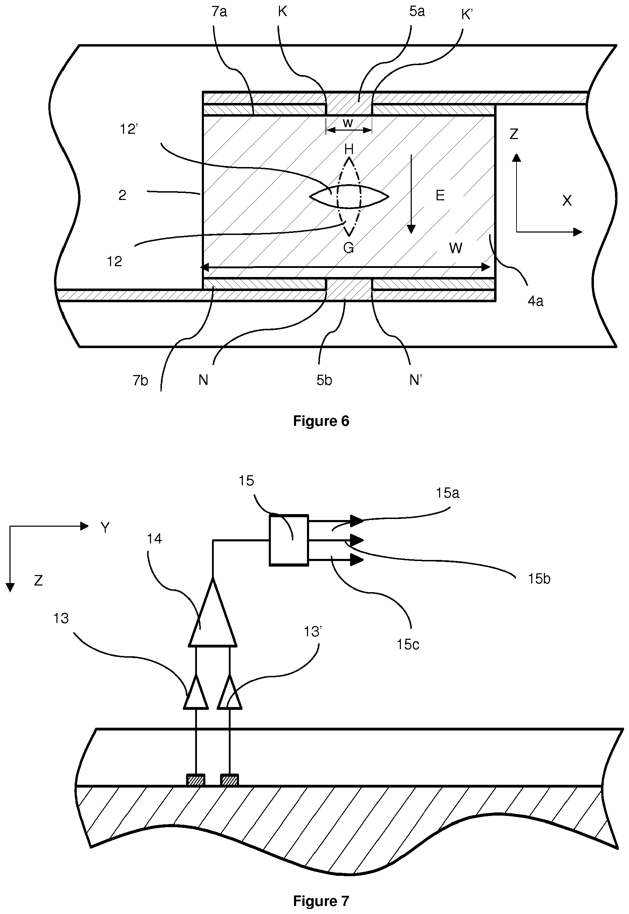

As a result, multiple harmonics are dependent of the type of the particle/cell and the liquid surrounding it. However, for a given kind of particles/cells, the multiple harmonics also depend on the alignment of the cell with respect to the field. For example referring to Figure 6, consider the cell 12 that is elongated along one direction and 12' in the opposite direction.

The non-linearity in AC impedance characteristics along the surface of the cell membrane differs from those perpendicular to it. Therefore, if the cell's position with respect to the two electrodes changes, the amplitude of the non-linear characteristics also change. This is schematically shown in Figure 6. This figure shows cross-section of a common microfluidic channel along the plane ZX perpendicular to the flow direction. There are two detection electrodes shown in cross-section: one excitation electrode 5a and one signal electrode 5b. The cell 12 is shown predominantly aligned along the Z-direction of the AC field and much of the AC current in the cell membrane is along the membrane. In contrast, the cell 12' is predominantly positioned perpendicular to the field direction, i.e. along the X-axis; and the AC current in the cell membrane is predominantly directed perpendicular to the cell membrane. The same applies to the liquid bi-layer along the surface of the cell. In Figure 6 the direction of the AC current is predominantly along the liquid-bi-layer for cell 12 and perpendicular to it for cell 12'. The size of the cell is disproportionately increased for clarity of the diagram. The bi-layer may have the diode-like electrical characteristics, i.e. non-linearity in the I-V characteristics and this will produce different multiple harmonics contributions to the signal detected at the signal electrode for these two cell orientations. The internal structure of the cell may also make anisotropic contribution of the non-linear I-V characteristics. For each cell 12 and 12' the non-linearity and therefore signal of multiple harmonics escalate substantially with increasing current density or electric field amplitude. The non-linearity arise from areas of highest field localisation and as the permittivity of cell is different from permittivity of surrounding fluid, the highest field areas are localised in the point H and G on the surface of the cell 12 as the electric field is predominantly parallel to the surface of the cell membrane. It is opposite for the cell 12', where the field localisation is less due to the electric filed being perpendicular to the surface of the cell membrane. This dependency of signal at multiple harmonics is opposite to the signal at first harmonic as displayed in Figure 5b, where $V_{N12}$ signal at harmonic N for the passing cell 12 and $V_{N12}'$ signal for harmonic N for the passing cell 12' correspondingly. One algorithm to use information from multiple harmonics in this case is to normalise the result, i.e. multiply the amplitude of the signal $V_\omega$ by the value of $V_{N\omega}$. Due to opposite dependency of this values on the orientation/alignment of the particle/cell within the microfluidic channel, the product (multiplication of the two values) $V_\omega * V_{N\omega}$ is less sensitive to the orientation/alignment of the particle/cell than each of these values taken individually.

The dominant multiple harmonics depend on the exact nature of non-linearity in the I-V characteristic and the permittivity. For example, the I-V characteristics may be non-linear symmetric. The term nonlinear means that dependency of the voltage on the current is not described by a linear proportionality relationship. In terms of local characteristics one could also say that the dependency on the current density in the material induced by AC electric field is not described by a linear proportionality relation of current density amplitude vs electric field amplitude. The term symmetric means that DC I-V characteristics of the current density (current) vs electric field (voltage) is identical for positive- and negative field (voltage) values. The opposite term non-symmetric characteristic means that the I-V characteristics is different for positive- and negative field (voltage) values. As it will be appreciated by those skilled in the art of electronics, the symmetric or non-symmetric nature of the I-V characteristics may result in just some of multiple harmonics present, e.g. only harmonics with odd or even numeral N.

As it will be appreciated by those skilled in the art of electronics, one could measure the signals at the main frequency ω and at multiple harmonics Nω either by using one set of differential amplifiers or different sets. In the case of one set of differential amplifiers 13 and 13' displayed in Figure 7, the signals at frequencies ω and Nω are separated at the stage of lock-in amplifier demodulation. Signals at frequencies ω and Nω are amplified and compared simultaneously. The signal is then digitised by analogue-to-digital converter ADC 15 and demodulated by lock-in amplifier 14 separately by multiplying it by digitised reference signals at frequencies the ω and Nω. In Figure 7, this is shown by three separate lines 15a, 15b and 15c after the ADC 15. Those skilled in the art of electronics will appreciate that there are numerous varieties of the amplification and conversion of the signal into a digital form.

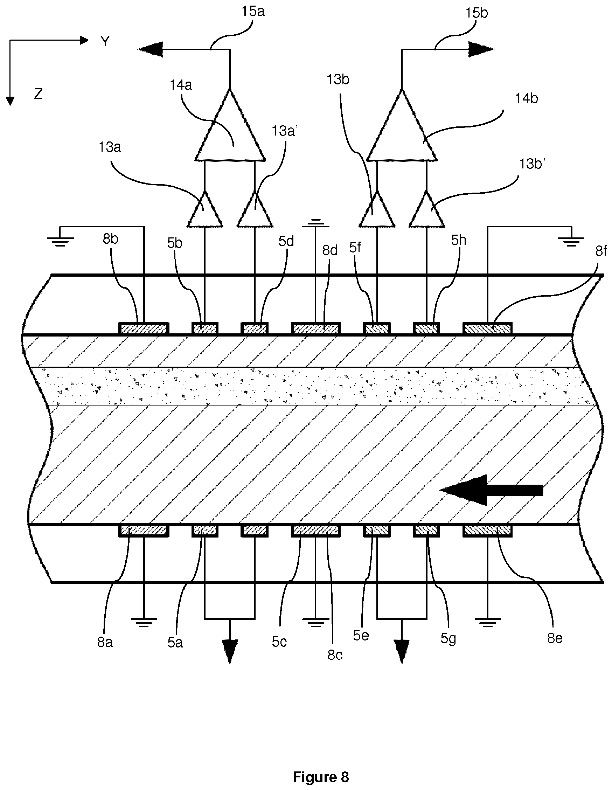

It shall also be appreciated by those skilled in the art of electronics that one does not need to have two signal electrodes. One could have an embodiment with a single signal electrode connected to one pre-amplifier. Likewise one could have an embodiment with a single excitation electrode. Embodiments having various other combinations of the electrodes are possible. For example, one could collect the signal at frequency of the main harmonics from one pair of signal electrodes and the signal at the frequency of the integer harmonics Nω from another pair of signal electrodes. This embodiment is shown in Figure 8 having four excitation electrodes 5a,5c,5e,5g and four signal electrodes 5b,5d, 5f,5h. The AC impedance signal at the excitation frequency ω is collected by the signal electrodes 5b and 5d, amplified by the pre-amplifiers 13a and 13a' and then sent to comparator 14a and then to the demodulator 15a at frequency ω. The signal at the multiple harmonics Nω is collected by the signal electrodes 5f and 5h, amplified by the pre-amplifiers 13b and 13b', and then sent to the comparator 14b and further to the demodulator 15b at frequency Nω. In this embodiment the sample fluid 3a is shown not flowing through the centre of the common microfluidic channel but rather closer to the signal electrodes. This is merely shown to stress that the particles/cells do not have to be positioned at the centre of the channel and various other positions are also possible. Figure 8 shows a number of shielding electrodes 8a - 8e on the side of the channel proximal the excitation electrodes and also proximal the signal electrodes. The shielding electrodes may also be positioned at other sides of the common microfluidic channel 2. We do not show the coupling of the reference signal from the voltage source into the demodulators. This is not shown in any of the figures for brevity. As will be appreciated by those skilled in the art of electronics, the supply of the signal from the AC voltage generator into demodulator, lock-in amplifier (phase sensitive detector) as frequency reference, is important. This is not shown for clarity of the figures.

In a typical embodiment the width of the excitation and sensing electrodes is in the range of 0.05 mm to 50 mm.

The choice of the frequency ω depends on the specific particles/cells. It was found that it is best to probe the signal in the frequency range of 10 KHz to 200 MHZ and tune the frequency ω that gives the highest amplitude of multiple harmonics Nω. This needs to be done with a fixed amplitude of the voltage supplied to the excitation electrode from an AC generator as multiple harmonics signals increase substantially with increasing the amplitude of the voltage. Likewise, the integer order of the harmonics Nω should be tuned in experimentally to get into the signal of the highest amplitude. Typically the AC voltage supplied to the excitation electrodes has the amplitude in the range of 0.01 V to 50 V. The higher the voltage, the greater is intensity of the multiple harmonics signal. The maximum allowed value of the voltage depends of the dimensions of the channel, the size (width) of the electrodes and also the conductance of the sample fluid which may depend on pH of the sample fluid and its other characteristics. Typically the greater is the conductance and the smaller is the dimensions of the channel, the lower is the safe permitted voltage that could be coupled to the excitation electrode/electrodes.

The electrodes do not need to make electric contact across the entire wall of the common microfluidic channel. Example of such embodiment is shown in Figure 6, presenting cross-section across the common microfluidic channel perpendicular to the flow direction. In this embodiment there are dielectric layers 7a and 7b separating the excitation 5a and the signal electrodes 5b from the interior of the channel 2 for a fraction of area of the electrodes proximal the wall of the common microfluidic channel 2. The channel does not have rectangular cross-section. The excitation 5a and signal electrodes 5b are open to the interior of the common microfluidic channel 2 between the points K and K' and also between the points N and N' respectively. As the electrodes are manufactured using the method of lithography, one could fabricate such a dielectric layer of e.g. SU8 polymer and one could also readily form the opening windows such as marked by letters KK' and NN'. The windows could cover a fraction of the width w of the channel, for example 1-90% of the value of W.

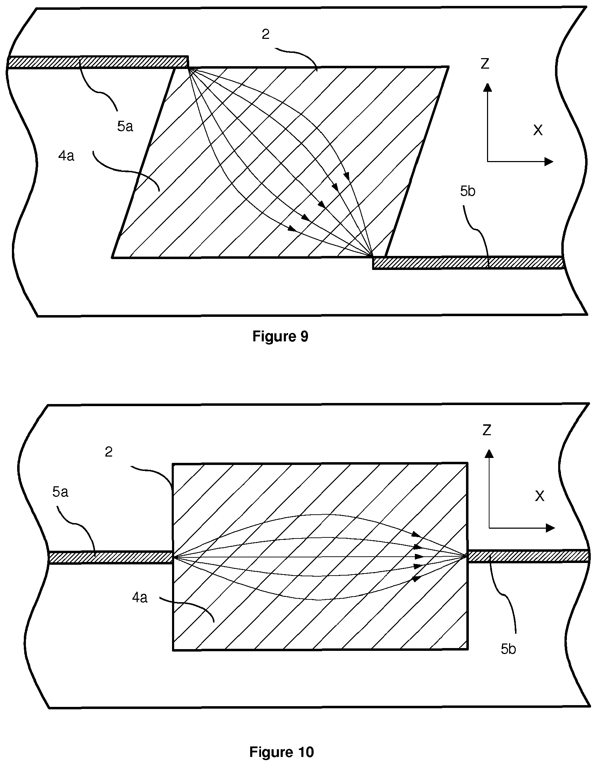

Figure 9 and Figure 10 show cross-sections of two other examples of common microfluidic channels with different layouts of the electrodes. In Figure 9 the two electrodes 5a and 5b make contacts with corners of the channel and the AC field is nearly diagonal. In this example the cross-section of the common microfluidic channel 2 has the shape of parallelogram. In Figure 10 the electrodes 5a and 5b are positioned along the two vertical walls of the common microfluidic channel 2 and the AC field is predominantly horizontal. The lines of electric field are indicated schematically in Figures 9 and 10.

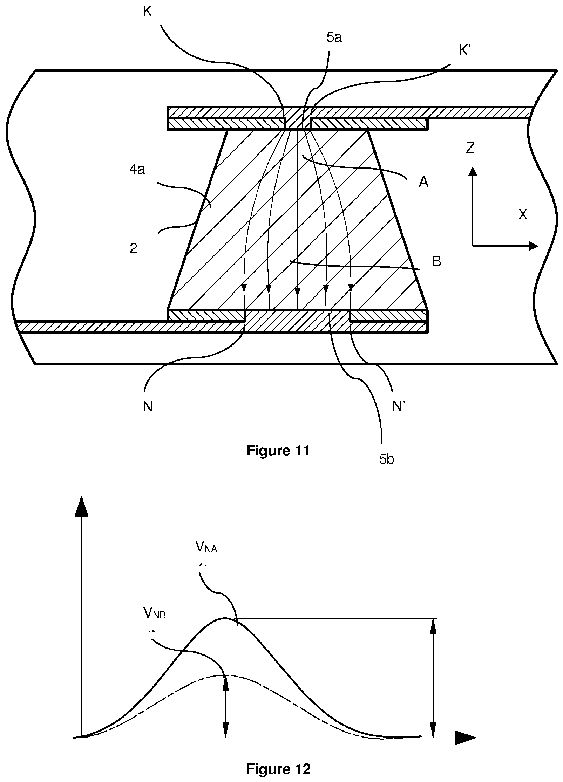

The cross-section of the channel 2 does not need to be rectangular of square. One could have circular, triangular, elliptical channel or indeed channels of various other cross-sections. Figure 11 shows cross-section of a channel 2 that is also not rectangular. In the same way as in Figures 9, 10, the cross-section of Figure 11 is made perpendicular to the flow direction. In this example the window NN' at one of the electrodes 5a (in this example the signal electrode) is much smaller than the width of the window KK' on the second (excitation) electrode 5b. In this case the current density in the vicinity of the window NN' is much greater than the current density in the vicinity of the window KK'. As a result, in this example the intensity of the multiple harmonics signal is greater in the vicinity of the window NN' than in the vicinity of the window KK'. This is because the nonlinearity and multiple harmonics escalate with the increasing current density or increasing electric field. This means that the intensity of the multiple harmonics signal is indicative of the position of the cell/particle within the cross-sections of the channel 2. In the same way, in the case of examples shown in Figures 9 and 10, the current density is greatest in the vicinity of the points where electrodes make contacts with the interior of the common microfluidic channel 2.

This is shown schematically in Figure 12 that presents the amplitude of the multiple harmonics N for the same cell with the same direction of alignment but positioned at two different points: point A and point B. These two amplitudes are labelled as $V_{NA}$ and $V_{NB}$. The points A and B are schematically indicated in Figure 11. Such information on the magnitude of the multiple harmonics signal Nw can be combined with the information from the first harmonic signal for these two positions $V_A$ and $V_B$. The amplitude of the first harmonics signal $V_\omega$ is also dependent on the position of the particle/cell within the cross-section of the microfluidic channel. The dependency will be qualitatively similar to the one for the multiple harmonics signal $V_{N\omega}$ presented in Figure 12: the signal will increase $V_{NA}$ (solid line) once the particle/cell moves up into the area of the higher field and higher current density. There are a number of algorithms how the information from the multiple harmonics signal $V_{N\omega}$ could be utilised. One algorithm is to normalise the result, i.e. divide the amplitude of the signal $V_\omega$ by the value of $V_{N\omega}$. Since both of these values depend on the position of the particle/cell within the microfluidic channel, the ratio $V_\omega/V_{N\omega}$ is less sensitive to the position of the particle/cell than each of these values taken individually. One could device a more accurate algorithm if so required. Since the dependencies of the two values: $V_\omega$ and $V_{N\omega}$, on the position on the particles/cells within the channels could be different, one could first measure the dependence of both, $V_\omega$ and $V_{N\omega}$, on the position for a given set of particles/cells and then extract from the dependency $V_{N\omega}$ the position of the particle/cell within the microfluidic channel and then renormalize the measured value of $V_\omega$ for the actual position of the given particle/cell. This requires calibration of the microfluidic device specific to the particles/cells used in it. Another way to use this information is to plot the scatter of particles not in 2D coordinate system with axis indicating the amplitude and the phase of the $V_\omega$ signal as is commonly done in AC impedance spectroscopy but rather plot them in 3D coordinate system where the third axis is the amplitude of the signal $V_{N\omega}$. The same approach applies to compensate for the uncertainty of anisotropic particle/cell alignment in the microfluidic channel.

One could combine various configurations of the electrodes described above. For example one could have two electrodes for the measurements of the multiple harmonics signal $V_{N\omega}$ as shown in any of the preceding figures followed by a set of electrodes to measure the signal at the main excitation frequency $V_\omega$.

One could measure the main harmonics at frequency $\omega1$ and the multiple harmonics integer multiples of another frequency $\omega2$, here $\omega1 \neq \omega2$.

Excitation electrode may be connected to a voltage/current generator supplying more than one harmonics, i.e. an assembly of harmonics, say frequencies $\omega1$, $\omega2$, $\omega3$, ...$\omega i$. In this way one could detect multiple signals at these very same frequencies or their multiples e.g. $\omega1$, $\omega2$, $N\omega3$, $M\omega i$ where N and M are integers. Those skilled in the art of signal detection will appreciate that there many different possible varieties of these embodiments.

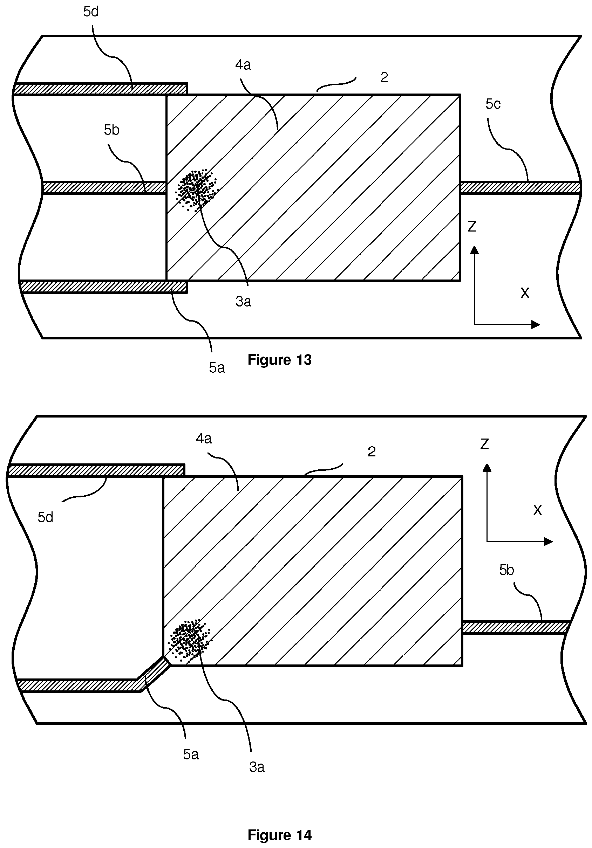

The sample fluid does not need to be focused at the centre of the common channel. Figure 13 shows embodiment with the common microfluidic channel 2 of rectangular cross-section with the sample fluid 3 located close to the vertical wall of the common microfluidic channel 2. In this embodiment the sample fluid 3 is not surrounded by the guidance fluid 4 at all the sides. In this the sample fluid 3 is making contact with the left wall of the channel and the other sides of the sample fluid 3 are surrounded by the guidance fluid 4. Most other embodiments shown in this document show the examples of the common microfluidic channels 2 having the sample fluid 3 being enveloped on all the sides by the guidance fluid 4. This is not a necessary requirement. In the device shown in Figure 13, there are two sets of detection electrodes 5b and 5d. The excitation electrode 5a and the detection electrode 5b producing the field between them along predominantly horizontal axis x, and the excitation electrode 5c and the signal electrode 5d producing predominantly vertical field along the z-axis. The excitation electrodes 5a and 5c could be coupled to voltages of the same frequency or different frequencies. The detection electrodes 5b and 5d could be set to collect the main harmonics or multiple harmonics of these frequencies. In other aspects the operation of this embodiment is similar to the ones described earlier. For example instead of one detection electrode 5d shown in Figure 13, one could have two adjacent detection electrodes as in Figure 4b.

Figure 14 shows a device with a channel 2 of a rectangular cross-section with the sample fluid 3a positioned close to one of the corners of the rectangle. Corners of the rectangular channel 2 can also be made rounded. There is one excitation electrode 5a and two detection electrodes 5b and 5d in this device. The direction of the electric field from the excitation electrode 5a to the first detection electrode 5b is different to the one from the excitation electrode 5a to the second signal electrode 5d. In this case they are nearly orthogonal to each other.

In the context of the present invention the term cluster of particles/cells can be used to describe a small group of particles/cells, for example 2-20 particles/cells linked together by binding forces and one can treat such clusters in the same way as single particles/cells.

Figures of this document show excitation electrodes and signal electrodes making direct contact with the interior of the common microfluidic channel. This does not have to be always the case and one could construct embodiment where some or all of these electrodes are electrically insulated from the interior of the common microfluidic channel. This device could be more practical for operation at very high excitation frequencies, e.g. above 10 MHz. It is understood that cells addressed by the above description could be any live or dead cells, and non-mammalian mammalian cells, sperm cells, etc. The use of hydrodynamic focussing is entirely optional. One may arrange the flow of sample fluid through the common microfluidic channel without any use of the sheath fluid. The embodiments in the invention described with reference to the drawings comprise a computer apparatus and/or processes performed in a computer apparatus. As an example not part of the present invention there are provided computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a memory stick or hard disk. The carrier may be an electrical or optical signal which may be transmitted via an electrical or an optical cable or by radio or other means.

It will be appreciated that for many common envisaged applications in this invention, the particles in the fluid are cells, and particulate containing fluid could be a suspension of mammalian cells, semen, blood cells, viruses, bacteria or indeed any other type of isolated particles. However, the technology could also be used with numerous other types of particles: organic, inorganic, ceramic, composite, nanoparticles, etc., both solid, semi-solid or liquid (e.g. protein particles or drops of one liquid in the stream of another one).

**Claims**

1. A system for identification of particles/cells comprising:

   at least one microfluidic channel configured to sustain a flow of a sample fluid through said microfluidic channel and carrying the particles/cells along the channel;
   at least one excitation electrode and at least one signal electrode, the excitation and signal electrodes being electrically coupled with each other via the flow of sample fluid in the microchannel;
   the at least one excitation electrode is connected to an AC voltage/current source operating at a frequency, $\omega$, and the at least one signal electrode is connected to a detector measuring the signal at one or more frequencies set to an integer multiple, $N\omega$, of the frequency $\omega$, wherein the integer N is greater than one,
   **characterised in that** the system comprises means for determining the position and/or alignment of the particle/cell within the cross-section of the microfluidic channel using the amplitude and/or phase of the signal at the multiple frequency $N\omega$.

2. The system of claim 1 wherein the means for determining the position and/or alignment of the particle/cell within the cross-section of the microfluidic channel employs the amplitude and/or phase of a plurality of signals at the multiple frequency Nω.

3. The system of claim any preceding claim wherein the detector is a narrow band-pass amplifier with at least one centre of the pass band tuned to the value Nw or the detector is a lock in amplifier set to the frequency Nω.

4. The system of any preceding claim wherein the particles/cells are mammalian cells and/or X- and Y- chromosome bearing semen cells.

5. The system of any preceding claim wherein there are at least two signal electrodes, and the signal at the integer multiple N of frequency ω is measured by taking the signals from said two signal electrodes and a module configured for a comparative analysis of the two signal electrodes using a differential amplifier or a comparator device.

6. The system of any preceding claim wherein the detection of cells comprises a module for measuring/detecting the signal from the said at least one signal electrode at the excitation frequency ω and measuring/detecting the signal at the frequency/frequencies of integer multiple of frequency ω.

7. The system of any preceding claim wherein the system additionally comprises optical means for detection/identification of particles/cells.

8. The system of any preceding claim wherein the excitation electrode and the signal electrode comprise different surface areas of electric coupling to an interior of the microfluidic channel configured to define position dependent current density across the cross-section of the microfluidic channel and enable generation of the signal at the frequency Nω dependent on the position of the particles/cells with respect to the sensing electrodes.

9. The system of any preceding claim including means to correlate the signal obtained at the frequency Nω with a signal obtained at the excitation frequency ω and offset inaccuracy induced by inconsistency in the position and alignment of the particle/cell to identify the particle/cell.

10. The system of any of claims 7-9 including means to correlate the signal obtained at the frequency Nω with the signal obtained using optical means and offset inaccuracy induced by inconsistency in the position and alignment of the particle/cell and thus improve identification/detection of the particle/cell.

11. The system of any preceding claim comprising multiple signal electrodes tuned to different frequencies $\omega_i$ or tuned to different integer multiples of these frequencies.

**Patentansprüche**

1. System für die Identifizierung von Partikeln/Zellen, das Folgendes umfasst:

mindestens einen mikrofluidischen Kanal, der zur Erhaltung eines Flusses einer Probenflüssigkeit durch den mikrofluidischen Kanal und Tragen der Partikel/Zellen entlang des Kanals konfiguriert ist;
mindestens eine Anregungselektrode und mindestens eine Signalelektrode, wobei die Anregungs- und Signalelektrode elektrisch miteinander über den Fluss der Probenflüssigkeit in dem Mikrokanal gekoppelt sind;
wobei die mindestens eine Anregungselektrode mit einer Wechselspannungs-/- stromquelle verbunden ist, die bei einer Frequenz, ω, betrieben wird, und die mindestens eine Signalelektrode mit einem Detektor verbunden ist, der das Signal bei einer oder mehreren Frequenzen misst, die auf ein ganzzahliges Vielfaches, Nω, der Frequenz ω eingestellt sind, wobei die ganze Zahl N größer ist als eins,
**dadurch gekennzeichnet, dass** das System Mittel für die Bestimmung der Position und/oder Ausrichtung des Partikels/der Zelle innerhalb des Querschnitts des mikrofluidischen Kanals unter Verwendung der Amplitude und/oder Phase des Signals bei der vielfachen Frequenz Nω umfasst.

2. System nach Anspruch 1, wobei das Mittel für die Bestimmung der Position und/oder Ausrichtung des Partikels/der Zelle innerhalb des Querschnitts des mikrofluidischen Kanals die Amplitude und/oder Phase einer Vielzahl von Signalen bei der vielfachen Frequenz Nω anwendet.

3. System nach einem vorstehenden Anspruch, wobei der Detektor ein Schmalband-Pass-Verstärker mit mindestens einer Mitte des Durchlassbereichs ist, die auf den Wert Nω abgestimmt ist, oder der Detektor ein Lock-In-Verstärker ist, der auf die Frequenz Nω eingestellt ist.

4. System nach einem vorstehenden Anspruch, wobei die Partikel/Zellen Säugerzellen und/oder X- und Y-Chromosomen-tragende Samenzellen sind.

5. System nach einem vorstehenden Anspruch, wobei Folgendes vorliegt:
   mindestens zwei Signalelektroden, und das Signal bei dem ganzzahligen Vielfachen N der Frequenz ω durch Einbeziehen der Signale von den zwei Signalelektroden gemessen wird, und ein Modul, das für eine vergleichende Analyse der zwei Signalelektroden unter Verwendung eines Differenzverstärkers oder einer Vergleichsvorrichtung konfiguriert ist.

6. System nach einem vorstehenden Anspruch, wobei die Detektion von Zellen ein Modul für die Messung/Detektion des Signals von der mindestens einen Signalelektrode bei der Anregungsfrequenz ω und Messung/Detektion des Signals bei der/den Frequenz/Frequenzen des ganzzahligen Vielfachen der Frequenz ω umfasst.

7. System nach einem vorstehenden Anspruch, wobei das System zusätzlich optische Mittel für die Detektion/Identifizierung von Partikeln/Zellen umfasst.

8. System nach einem vorstehenden Anspruch, wobei die Anregungselektrode und die Signalelektrode unterschiedliche Oberflächenbereiche der elektrischen Kopplung zu einem Inneren des mikrofluidischen Kanals umfassen, das zur Definition der positionsabhängigen Stromdichte über den Querschnitt des mikrofluidischen Kanals und Ermöglichung der Erzeugung des Signals bei der Frequenz Nω in Abhängigkeit von der Position der Partikel/Zellen in Bezug auf die Messelektroden konfiguriert ist.

9. System nach einem vorstehenden Anspruch, das Mittel einschließt, um das Signal, das bei der Frequenz Nω erhalten wurde, mit einem Signal, das bei der Anregungsfrequenz ω erhalten wurde, zu korrelieren und Ungenauigkeiten, die durch Unstimmigkeiten in der Position und Ausrichtung des Partikels/der Zelle verursacht wurden, auszugleichen, um das Partikel/die Zelle zu identifizieren.

10. System nach einem der Ansprüche 7-9, das Mittel einschließt, um das Signal, das bei der Frequenz Nω erhalten wurde, mit dem Signal, das unter Verwendung von optischen Mitteln erhalten wurde, zu korrelieren und Ungenauigkeiten, die durch Unstimmigkeiten in der Position und Ausrichtung des Partikels/der Zelle verursacht wurden, auszugleichen und somit die Identifizierung/Detektion des Partikels/der Zelle zu verbessern.

11. System nach einem vorstehenden Anspruch, das mehrere Signalelektroden umfasst, die auf unterschiedliche Frequenzen ωᵢ abgestimmt sind oder auf unterschiedliche ganzzahlige Vielfache dieser Frequenzen abgestimmt sind.

**Revendications**

1. Système pour l'identification de particules/cellules comprenant :

   au moins un canal microfluidique configuré pour alimenter un écoulement d'un fluide d'échantillon à travers ledit canal microfluidique et transportant les particules/cellules le long du canal ;
   au moins une électrode d'excitation et au moins une électrode de signal, les électrodes d'excitation et de signal étant couplées électriquement entre elles par l'intermédiaire de l'écoulement de fluide d'échantillon dans le microcanal ;
   l'au moins une électrode d'excitation est connectée à une source de tension/courant alternatif fonctionnant à une fréquence, ω, et l'au moins une électrode de signal est connectée à un détecteur mesurant le signal à une ou plusieurs fréquences réglées sur un multiple entier, Nω, de la fréquence ω, où l'entier N est supérieur à un, **caractérisé en ce que** le système comprend des moyens pour déterminer la position et/ou l'alignement de la particule/cellule au sein de la section transversale du canal microfluidique à l'aide de l'amplitude et/ou de la phase du signal à la fréquence multiple Nω.

2. Système selon la revendication 1, où les moyens pour déterminer la position et/ou l'alignement de la particule/cellule au sein de la section transversale du canal microfluidique emploient l'amplitude et/ou la phase d'une pluralité de signaux à la fréquence multiple Nω.

3. Système selon une quelconque revendication précédente, où le détecteur est un amplificateur à bande passante étroite avec au moins un centre de la bande passante accordé à la valeur $N\omega$ ou le détecteur est un amplificateur synchrone réglé sur la fréquence $N\omega$.

4. Système selon une quelconque revendication précédente, où les particules/cellules sont des cellules mammaliennes et/ou des cellules de sperme portant des chromosomes X et Y.

5. Système selon une quelconque revendication précédente, où il y a au moins deux électrodes de signal, et le signal au multiple entier N de fréquence $\omega$ est mesuré en prenant les signaux desdites deux électrodes de signal et d'un module configuré pour une analyse comparative des deux électrodes de signal à l'aide d'un amplificateur différentiel ou d'un dispositif comparateur.

6. Système selon une quelconque revendication précédente, où la détection de cellules comprend un module pour mesurer/détecter le signal provenant de ladite au moins une électrode de signal à la fréquence d'excitation $\omega$ et mesurer/détecter le signal à la fréquence/aux fréquences d'un multiple entier de fréquence $\omega$.

7. Système selon une quelconque revendication précédente, où le système comprend en outre des moyens optiques pour la détection/l'identification de particules/cellules.

8. Système selon une quelconque revendication précédente, où l'électrode d'excitation et l'électrode de signal comprennent différentes zones de surface de couplage électrique à un intérieur du canal microfluidique, configurées pour définir une densité de courant dépendant de la position sur la section transversale du canal microfluidique et permettre la génération du signal à la fréquence $N\omega$ en fonction de la position des particules/cellules par rapport aux électrodes de détection.

9. Système selon une quelconque revendication précédente, incluant des moyens pour corréler le signal obtenu à la fréquence $N\omega$ avec un signal obtenu à la fréquence d'excitation $\omega$ et une imprécision de décalage induite par l'incohérence de la position et de l'alignement de la particule/cellule pour identifier la particule/cellule.

10. Système selon l'une quelconque des revendications 7 à 9, incluant des moyens pour corréler le signal obtenu à la fréquence $N\omega$ avec le signal obtenu à l'aide de moyens optiques et l'imprécision de décalage induite par l'incohérence de la position et de l'alignement de la particule/cellule et ainsi améliorer l'identification/détection de la particule/cellule.

11. Système selon une quelconque revendication précédente, comprenant de multiples électrodes de signal accordées à différentes fréquences $\omega_i$ ou accordées à différents multiples entiers de ces fréquences.

Reference

$\Theta_{sig}$

Signal

$\Theta_{ref}$

Lock-in

**Figure 1a**

MIXER (P.S.D.)

SIGNAL
INPUT

INPUT
AMPLIFIER

BANDPASS
FILTER

A

A.B

B

LOW PASS
FILTER

OUTPUT
AMPLIFIER

OUTPUT

PHASE SHIFTER

REFERENCE
INPUT

REFERENCE
TRIGGER

**Figure 1b**

Reference sine

LP filter

Impedance Real part

Analogue input

ADC

Reference cosine

LP filter

Impedance Imaginary part

**Figure 1c**

15

14

13

13'

5d

8d

2

8b

4a

5b

3a

5c

8a

5a

8c

1

**Figure 2**

Figure 3a

Figure 3b

Figure 4a

Figure 4b

**Figure 4c**

Figure 5a

Figure 5b

**Figure 6**

**Figure 7**

Figure 8

**Figure 9**

**Figure 10**

**Figure 11**

**Figure 12**

**Figure 13**

**Figure 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008221805 A
- JP 2003107099 A
- WO 2008125081 A1, Theisen Janko
- US 20090283148 A1, Shinoda

### Non-patent literature cited in the description

- **T.SUN ; H. MORGAN.** Single-cell microfluidic impedance cytometry: a review. *Microfluid. Nanofluid,* 2010, vol. 8, 423-443
- **MIKAEL EVANDER.** Microfluidic impedance cytometer for platelet analysis. *Lab on a chip,* 2013, vol. 13
- **R. RODRIGUEZ-TRUJILLO ; C. MILLS ; J. SAMITIER ; G. GOMILA.** *Microfluid. Nanofluid,* 2007, vol. 3, 171
- **P.WALSH ; E. WALSH ; M. DAVIES.** *Int. J. Heat Fluid Flow,* 2007, vol. 28, 44
- **R. SCOTT ; P. SETHU ; C.K. HARNETT.** Three-dimensional hydrodynamic focussing in a microfluidic Coulter counter. *Rev. Sci. Instruments,* 2008, vol. 79, 046104
- **YU-JUI CHIU ; S.H. CHO ; Z. MEI ; V. LIEN ; T.F. WU ; Y.H. LO.** Universally applicable three-dimensional hydrodynamic microfluidic flow focussing. *Lab Chip,* 2013, vol. 13, 1803
- Microchip and channel structure for the same. *Masataka Shinoda,* 04 May 2009